# EUROPÄISCHE PATENTSCHRIFT

(11) **EP 0 737 820 B1**
(45) Veröffentlichungstag und Bekanntmachung des Hinweises auf die Patenterteilung: **25.07.2001**
(21) Anmeldenummer: 96104849.3
(22) Anmeldetag: 27.03.1996
(51) Int. Cl.: F16C 11/06

(54) **Kugelgelenk**
Ball-joint
Articulation à rotule

(30) Priorität: 12.04.1995 DE 19513826
(43) Veröffentlichungstag der Anmeldung: 16.10.1996
(73) Patentinhaber: TRW Fahrwerksysteme GmbH & Co. KG, 40547 Düsseldorf (DE)
(72) Erfinder: Lieber, Hanno, Dipl.-Ing., D-45219 Essen-Kettwig (DE); Welchert, Erhard, D-41363 Jüchen-Gierath (DE)
(74) Vertreter: Stenger, Watzke & Ring Patentanwälte

(56) Entgegenhaltungen:
- DE-A- 2 443 089
- FR-A- 2 503 291
- US-A- 3 089 718
- US-A- 4 035 094
- US-A- 4 163 617

## Beschreibung

Die Erfindung betrifft ein insbesondere für die Spur- und Lenkstangen von Nutzkraftfahrzeugen bestimmtes Kugelgelenk mit einem Gelenkgehäuse, in dem die Lagerkugel eines Kugelzapfens verdreh- und kippbar mittels einer Lagerschale gelagert ist, die im unteren Teil des Gelenkgehäuses formschlüssig angeordnet ist und die die Lagerkugel unterhalb ihres größten Durchmessers auf einer kugelringförmigen Lagerfläche unter Belastung durch eine Federkraft abstützt, die durch ein zugleich eine obere Lagerschale bildendes Federelement erzeugt wird, das sich an der Unterseite eines das Gelenkgehäuse verschließenden Deckels abstützt.

Derartige Kugelgelenke sind bekannt. Bei ihnen ist der Deckel mit seinem Rand formschlüssig in eine Nut des Gelenkgehäuses eingewalzt, und zwar zusammen mit dem Rand des Federelementes, das mit seiner Mitte an der Unterseite des Deckels anliegt und seine Federkräfte mit einem zwischen seiner mittigen Anlage und seiner randseitigen Einspannung liegenden ringförmigen Bereich erzeugt.

Ein solches Kugelgelenk zeigt beispielsweise die DE-A-24 43 089. Bei diesem Kugelgelenk ruht die Gelenkkugel in einem Gehäuse und wird mittels eines oberen und eines unteren Lagerelementes gelagert. Das obere Lagerelement weist dabei oberhalb der Kugel sich von außen nach innen erstreckende, zungenartige Federelemente auf. Ein Deckel zum Verschließen des Gehäuses wird in einem Ausgangszustand in eine in der Innenwand des Gehäuses angeordnete Nut eingebracht und in dieser durch Umformen formschlüssig festgelegt. Bei eingesetztem Deckel erzeugen die Federelemente eine in Richtung auf den Kugelzapfen hin gerichtete Federkraft auf das obere Lagerelement und somit auf die Gelenkkugel.

Diese bekannte Konstruktion hat den Nachteil, daß die Federeigenschaften des Federelementes bei der Montage des Kugelgelenkes fast vollständig zum Toleranzausgleich verbraucht werden, da die Position des Deckels und damit des Federelementes gegenüber dem Gelenkgehäuse durch die im Gehäuse ausgebildete Nut vorgegeben ist. Bereits bei geringem Verschleiß entsteht deshalb vorzeitig ein freies Spiel im bekannten Kugelgelenk, das deshalb nur eine begrenzte Lebensdauer hat und die Gefahr eines vorzeitigen Totalausfalles birgt, wenn der progressiv zunehmende Verschleiß einen bestimmten Betrag überschreitet.

Der Erfindung liegt die **Aufgabe** zugrunde, das Kugelgelenk der voranstehend beschriebenen Art derart weiterzubilden, daß sich nach der Montage ein definierter Ausgangszustand mit vollständiger Beseitigung der Fertigungstoleranzen ergibt und das Federelement im Ausgangszustand definierte Federkräfte zur Verfügung stellt, die die durch Verschleiß entstehende Elastizität des Gelenkes bis zum Erreichen eines definierten Verschleißes ausgleichen.

Die **Lösung** dieser Aufgabenstellung durch die Erfindung ist dadurch gekennzeichnet, daß sich der im Ausgangszustand mit einem den Innendurchmesser des Gelenkgehäuses übersteigenden Außendurchmesser ausgebildete Deckel mit seinem Rand kraftschlüssig im Gelenkgehäuse abstützt und daß sich das Federelement ausschließlich im Zentrum des Deckels mittels zur Mitte weisender Federzungen abstützt, die an ihrem Außenrand in ein zylindrisches Mittelteil übergehen, an das sich ein kugelringförmiger, an der Oberfläche der Lagerkugel anliegender Randbereich anschließt.

Bei der Montage des erfindungsgemäß weitergebildeten Kugelgelenkes wird der Deckel mit einer vorgegebenen, im Deckelzentrum aufgebrachten Kraft derart elastisch verformt, daß der im Ausgangszustand einen den Innendurchmesser des Gelenkgehäuses übersteigenden Außendurchmesser aufweisende Deckelrand in die Bohrung des Gelenkgehäuses eintritt. Der Deckel wird derart weit in das Gelenkgehäuse eingedrückt, daß der zylindrische Mittelteil definiert an der Oberfläche der Lagerkugel anliegt, wogegen sich der Deckelrand kraftschlüssig im Gelenkgehäuse abstützt. Aufgrund dieser kraftschlüssigen Abstützung des Deckelrandes im Gehäuse nimmt der Deckel am Ende seiner Montage eine Stellung ein, die durch die jeweiligen Herstellungstoleranzen vorgegeben ist und nicht durch einen Formschluß wie beim Stand der Technik.

Da am Ende des Montagezustandes das zylindrische Mittelteil des Federelementes formschlüssig an der Oberfläche der Lagerkugel anliegt, sind die Federzungen des Federelementes definiert mit ihrem maximalen Federvermögen verformt worden, so daß sie aufgrund ihrer Elastizität eine größstmögliche Federkraft speichern. Im montierten Kugelgelenk sind somit alle Herstellungstoleranzen beseitigt, ohne daß hierfür ein Teil der Federkräfte des Federelementes verbraucht worden ist. Die Federkräfte stehen mit ihrem maximalen Betrag für einen Ausgleich des bei der Benutzung des Kugelgelenkes auftretenden Verschleißes zur Verfügung. Durch die Reibwege der Federzungen am Deckel ergibt sich hierbei eine Eigendämpfung des Gelenkes, die einen vorzeitigen Verschleiß durch hochfrequente, stoßartige Belastungen zwischen Kugeloberfläche und Lagerfläche erheblich reduziert.

Sobald der maximal zulässige Verschleiß zwischen Lagerkugel und Lagerschale erreicht ist, sind die Federkräfte des Federelementes verbraucht, ohne daß jedoch hiermit ein Ausfall der Gelenkfunktion verbunden ist. Das Kugelgelenk macht jedoch durch sein spürbares Spiel auf den notwendigen Austausch aufmerksam, ohne funktionsunfähig zu sein.

Um im Ausgangszustand, d.h. vor der Montage den Außendurchmesser des Deckels größer als den Innendurchmesser des Gelenkgehäuses auszubilden, wird gemäß einem weiteren Merkmal der Erfindung im Randbereich des Deckels eine ringförmige, zum Federelement verlaufende Vertiefung ausgebildet, deren neutrale Faser unterhalb der ringförmigen Berührungslinie des unteren Deckelrandes an der zylindrischen Innenfläche des Gehäuses liegt. Hierdurch ergibt sich ein elastisch federnder Randbereich für den Deckel, der außerdem zu einer zuverlässigen kraftschlüssigen Festlegung des Deckelrandes in der Bohrung des Gelenkgehäuses führt.

Ausschließlich aus Sicherheitsgründen kann gemäß einem weiteren Merkmal der Erfindung nach Abschluß der Deckelmontage der Rand des Gelenkgehäuses zur Bildung eines formschlüssigen Anschlages eingewalzt werden. Dieses Einwalzen stellt jedoch keine formschlüssige Festlegung des Deckelrandes während des Montagevorganges dar.

Bei einer bevorzugten Ausführungsform der Erfindung läuft der sich an das zylindrisch Mittelteil anschließende, als obere Lagerschale dienende kugelringförmige Randbereich des Federelementes in einem nach außen abstehenden Ringbund aus. Durch diese Ausgestaltung ergibt sich eine prozeßsichere Herstellung des Federelementes.

Mit der Erfindung wird schließlich vorgeschlagen, die Federzungen unter Ausbildung eines Abrollradius kontinuierlich in den zylindrischen Mittelteil des Federelementes übergehen zu lassen. Hierdurch werden örtliche Verformungen vermieden, die eine ungewollte Sollbruchstelle bilden könnten.

Auf der Zeichnung sind ein Ausführungsbeispiel des erfindungsgemäßen Kugelgelenkes, eines zugehörigen Federelementes und Deckels sowie Darstellungen der Deckelmontage und des Verschleißverhaltens des Gelenkes dargestellt, und zwar zeigen:
- Fig. 1: einen Längsschnitt durch das Gelenk vor und nach der Deckelmontage,
- Fig. 2: einen Schnitt durch das zugehörige Federelement vor dessen Montage,
- Fig. 3: eine Draufsicht auf das Federelement gemäß Fig. 2,
- Fig. 4: eine vergrößerte Schnittdarstellung des Deckels, wiederum vor und nach der Montage und
- Fig. 5: einen der Fig. 1 entsprechenden Längsschnitt durch das Gelenk nach maximalem Verschleiß.

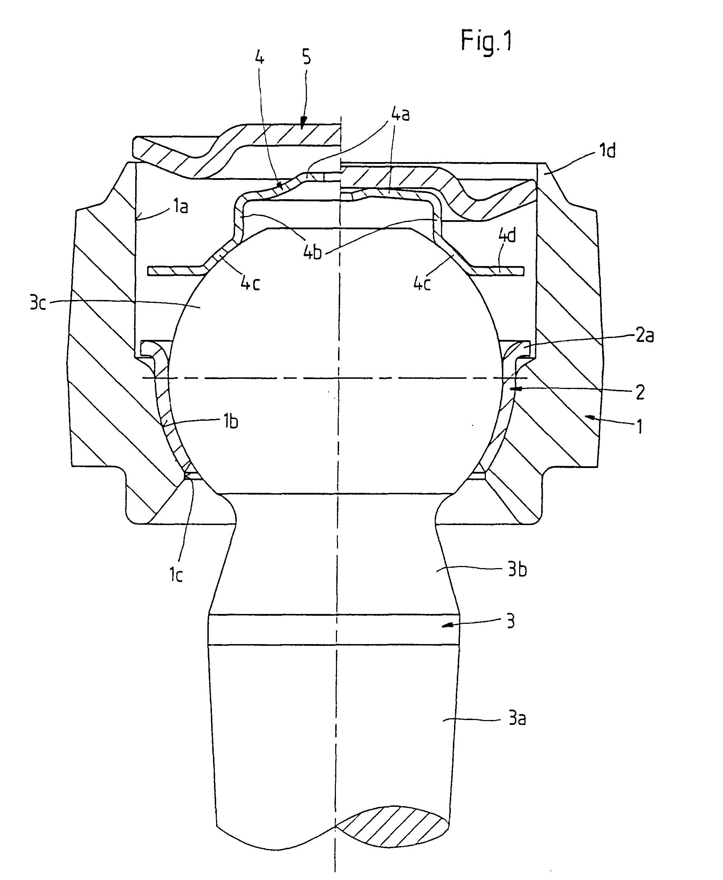

Das in der linken Hälfte der Fig. 1 vor der Deckelmontage und in der rechten Hälfte der Fig. 1 nach der Deckelmontage gezeigte Kugelgelenk umfaßt ein Gelenkgehäuse 1, das mit einer zylindrischen Bohrung 1a und einer kugelringförmigen Lagerfläche 1b zur Aufnahme einer Lagerschale 2 versehen ist. Die Lagerschale 2 hat einen radial nach außen abstehenden Rand 2a und endet vor einer Durchtrittsöffnung 1c im unteren Teil des Gelenkgehäuses 1 für einen Kugelzapfen 3.

Der Kugelzapfen 3 umfaßt einem beim Ausführungsbeispiel leicht konischen Zapfenteil 3a, der mittels eines gegenläufig konischen Überganges 3b in eine Lagerkugel 3c übergeht. Diese Lagerkugel 3c liegt unterhalb ihres größten Durchmessers an der kugelringförmigen Lagerfläche der Lagerschale 2 an.

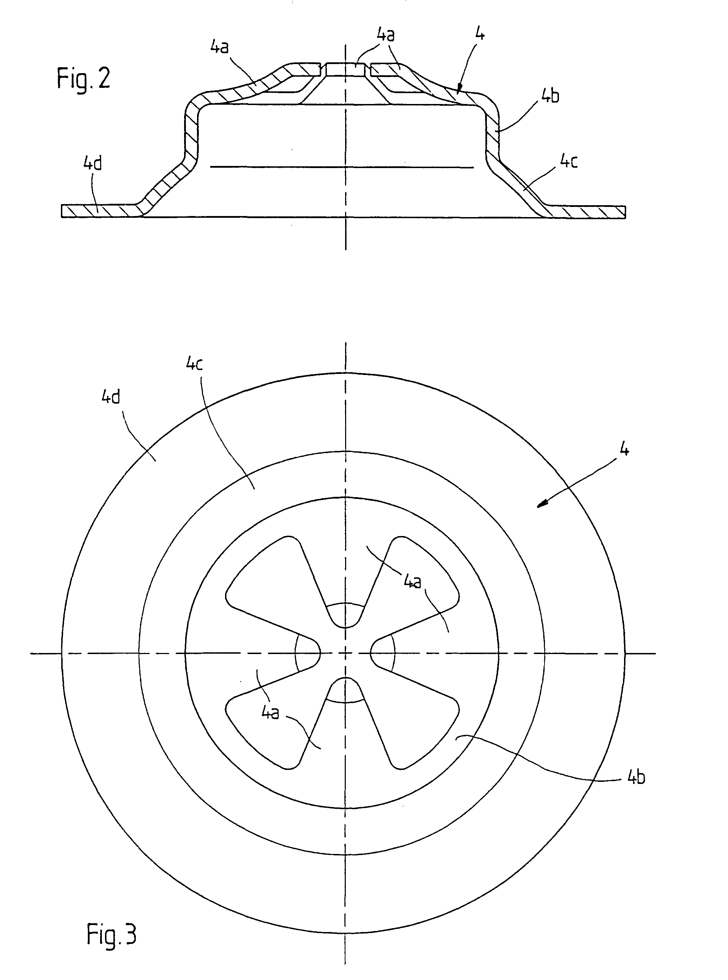

Die Lagerkugel 3c wird durch ein Federelement 4 in Richtung auf die Lagerschale 2 belastet, das anhand eines Ausführungsbeispiels in den Figuren 2 und 3 dargestellt ist. Wie diese Darstellungen erkennen lassen, hat das Federelement 4 beim Ausführungsbeispiel vier zur Mitte weisende Federzungen 4a, die durch eine Rundung in einen zylindrischen Mittelteil 4b übergehen. An diesen zylindrischen Mittelteil 4b schließt sich ein kugelringförmiger Randbereich 4c an, der schließlich in einen radial nach außen abstehenden Ringbund 4d übergeht. Mit seinem kugelringförmigen Randbereich 4c liegt das Federelement 4 oberhalb des größsten Durchmessers der Lagerkugel 3c an deren Oberfläche an.

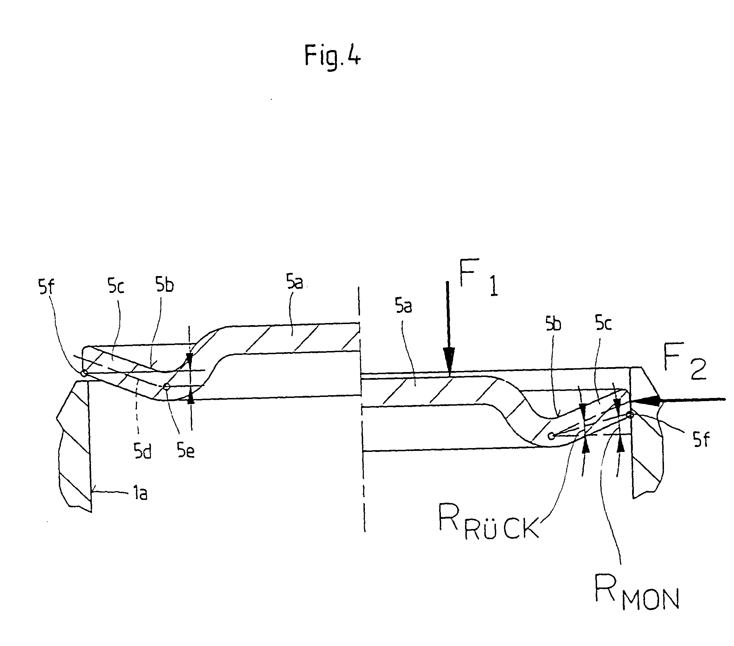

Im montierten Zustand stützen sich die Federzungen 4a mit ihrem spitz zulaufenden Endbereich an der Unterseite eines Deckels 5 ab, der vergrößert in Fig. 4 gezeigt ist.

Hiernach hat der Deckel 5 einen kreisförmigen, ebenen Mittenbereich 5a, an den sich eine ringförmige, zum Federelement 4 hin verlaufende Vertiefung 5b anschließt, die in einen schrägverlaufenden Randbereich 5c übergeht. Die in Fig. 4 gestrichtelt eingezeichnete neutrale Faser 5d liegt an der tiefsten Stelle 5e der Vertiefung 5b unterhalb der ringförmigen Berührungslinie 5f, mit der der Rand des Deckels 5 bei und nach der Montage in der zylindrischen Bohrung 1a des Gelenkgehäuses 1 anliegt.

Durch diese in Fig. 4 gezeichnete Ausgestaltung wird erreicht, daß der Deckel 5 mit einer verhältnismäßig geringen Montagekraft F₁, die zentral auf den kreisförmigen Mittenbereich 5a ausgeübt wird, in das Gelenkgehäuse 1 eingedrückt werden kann. Aufgrund der Vertiefung 5b und des sich anschließenden schrägen Randbereiches 5c biegt sich bei der Montage der Randbereich 5c entgegen der Eindrückbewegung elastisch zurück, so daß sich auf einfache Weise eine Anpassung des im Ausgangszustand größeren Außendurchmessers des Deckels 5 an den kleineren Innendurchmesser, d.h. an die Bohrung 1a des Gelenkgehäuses 1 ergibt. Die Eindrückbewegung des Deckels 5 ist beendet, sobald gemäß der rechten Darstellung in Fig. 1 der zylindrische Mittelteil 5b des Federelementes 4 spielfrei an der Lagerkugel 3c anliegt. Auf diese Weise sind sämtliche Herstellungstoleranzen bei Abschluß der Deckelmontage ausgeglichen. Gemäß der rechten Darstellung in Fig. 4 bewirkt der elastisch verformte Randbereich 5c des Deckels 5 im montierten Zustand eine sichere Festlegung des Deckelrandes am Gelenkgehäuse 1, da die in diesem Randbereich vorhandenen Rückstellkräfte dazu tendieren, den Mittenbereich 5a des Deckels 5 aus der zylindrischen Bohrung 1a des Gelenkgehäuses 1 zurückzudrücken, die hierfür erforderliche Durchmesservergrößerung des Deckels 5 jedoch durch die Anlage seines Randbereiches 5c in der zylindrischen Bohrung 1a des Gelenkgehäuses 1 verhindert wird. Es ergibt sich auf diese Weise eine Klemmkraft F₂, die den Deckel 5 trotz der ausschließlich kraftschlüssigen Festlegung sicher in der zylindrischen Bohrung 1a des Gelenkgehäuses 1 hält. In der rechten Hälfte der Fig. 4 ist weiterhin zu erkennen, daß die durch den Winkel symbolisierte Rückstellkraft R_{Rück} größer ist als die bei der Montage in diesem Bereich erzeugte Rückstellkraft R_{Mon}.

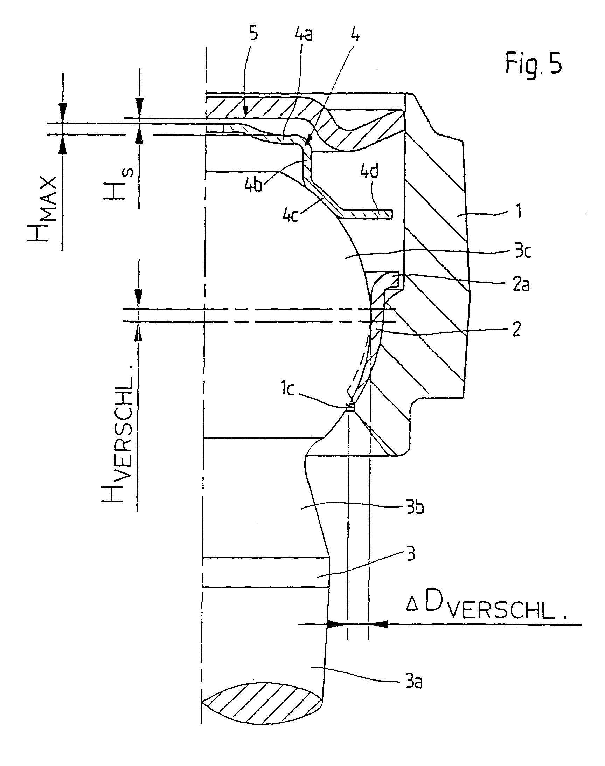

Die Fig. 5 zeigt ein Kugelgelenk im Längsschnitt, bei dem sich die Lagerschale 3c in Richtung der Durchtrittsöffnung 1c aufgrund von Verschleiß an der Lagerkugel 3c bzw. an der Lagerschale 2 um den Weg H_{VERSCHLEISS} verlagert hat. Die Darstellung zeigt der Einfachheit wegen den Verschleiß ausschließlich an der Lagerschale 2, die in Fig. 5 im Ausgangszustand mit gestrichelten Linien angedeutet ist.

Diese axiale Verlagerung der Lagerkugel 3c hat zur Folge, daß das Federelement 4 keine Federkraft mehr auf die Lagerkugel 3c ausübt, da die Federzungen 4a sich nicht mehr am Deckel 5 abstützen.

In Fig. 5 ist ein so großer Verschleiß dargestellt, daß sich zwischen der maximalen Zustellmöglichkeit H_{MAX}, d.h. dem maximalen Federweg der Federzungen 4a des Federelements 4 und dem Deckel 5 bereits ein freies Spiel H_{S} ausgebildet hat. Das Kugelgelenk erzeugt aufgrund dieses freien Spiels H_{S} Klappergeräusche, die auf seinen Austausch aufmerksam machen, ohne daß die Funktionsfähigkeit des Kugelgelenks aufgehoben wäre, da die Lagerkugel 3c nach wie vor zuverlässig mittels der Lagerschale 2 im Gelenkgehäuse 1 gelagert und gehalten ist. Die selbst bei einem derartigen Verschleiß noch vorhandene Überdeckung ΔD_{VERSCHLEISS} ist in Fig. 5 eingezeichnet.

### Bezugszeichenliste

- 1: Gelenkgehäuse
- 1a: Bohrung
- 1b: Lagerfläche
- 1c: Durchtrittsöffnung
- 1d: Rand
- 2: Lagerschale
- 2a: Rand

- 3: Kugelzapfen
- 3a: Zapfenteil
- 3b: Übergang
- 3c: Lagerkugel

- 4: Federelement
- 4a: Federzunge
- 4b: Mittelteil
- 4c: Randbereich
- 4d: Ringbund

- 5: Deckel
- 5a: Mittenbereich
- 5b: Vertiefung
- 5c: Randbereich
- 5d: neutrale Faser
- 5e: tiefste Stelle
- 5f: Berühungslinie

- F1: Montagekraft
- F₂: Klemmkraft

- RRück: Rückstellkraft
- R_{Mon}: Montagekraft
- H_{VERSCHLEISS}: verschleißbedingte Verlagerung
- H_{MAX}: Zustellmöglichkeit
- H_{S}: Spiel
- ΔD_{VERSCHLEISS}: Überdeckung

## Patentansprüche

1. Kugelgelenk, insbesondere für die Spur- und Lenkstangen von Nutzkraftfahrzeugen, mit einem Gelenkgehäuse, in dem die Lagerkugel eines Kugelzapfens verdreh- und kippbar mittels einer Lagerschale gelagert ist, die im unteren Teil des Gelenkgehäuses formschlüssig angeordnet ist und die die Lagerkugel unterhalb ihres größsten Durchmessers auf einer kugelringförmigen Lagerfläche unter Belastung durch eine Federkraft abstützt, die durch ein zugleich eine obere Lagerschale bildendes Federelement erzeugt wird, das sich an der Unterseite eines das Gelenkgehäuse verschließenden Deckels abstützt,
**dadurch gekennzeichnet**,
daß sich der im Ausgangszustand mit einem den Innendurchmesser des Gelenkgehäuses (1) übersteigenden Außendurchmesser ausgebildete Deckel (5) mit seinem Rand (5c) kraftschlüssig im Gelenkgehäuse (1) abstützt und daß sich das Federelement (4) ausschließlich im Zentrum des Deckels (5) mittels zur Mitte weisender Federzungen (4a) abstützt, die an ihrem Außenrand in einen zylindrischen Mittelteil (4b) übergehen, an den sich ein kugelringförmiger, an der Oberfläche der Lagerkugel (3c) anliegender Randbereich (4c) anschließt.

2. Kugelgelenk nach Anspruch 1, dadurch gekennzeichnet, daß im Randbereich (5c) des Deckels (5) eine ringförmige, zum Federelement (4) verlaufende Vertiefung (5b) ausgebildet ist, deren neutrale Faser (5d) unterhalb der ringförmigen Berührungslinie (5f) des unteren Deckelrandes an der zylindrischen Innenfläche des Gelenkgehäuses (1) liegt.

3. Kugelgelenk nach Anspruch 1 oder 2, dadurch gekennzeichnet, daß der Rand (1d) des Gelenkgehäuses (1) zur Bildung eines formschlüssigen Anschlages eingewalzt ist.

4. Kugelgelenk nach mindestens einem der Ansprüche 1 bis 3, dadurch gekennzeichnet, daß der sich an das zylindrische Mittelteil (4b) anschließende kugelringförmige Randbereich (4c) des Federelementes (4) in einem nach außen abstehenden Ringbund (4d) ausläuft.

5. Kugelgelenk nach mindestens einem der Ansprüche 1 bis 4, dadurch gekennzeichnet, daß die Federzungen (4a) unter Ausbildung eines Abrollradius kontinuierlich in den zylindrischen Mittelteil (4b) des Federelementes (4) übergehen.

## Claims

1. Ball joint, in particular for the track and steering rods of utility vehicles, having a joint housing, in which the bearing ball of a ball pivot is supported in a rotatable and tiltable manner by means of a bearing shell, which is disposed positively in the bottom part of the joint housing and supports the bearing ball below its maximum diameter on a raceway-shaped bearing surface with simultaneous loading by a spring force, which is generated by a spring element simultaneously forming a top bearing shell, which is supported against the underside of a cover closing the joint housing,
**characterized in**
that the cover (5), which is designed in the initial state with an outside diameter exceeding the inside diameter of the joint housing (1), is supported by its edge (5c) in a frictionally engaged manner in the joint housing (1) and that the spring element (4) is supported exclusively in the centre of the cover (5) by means of spring tongues (4a), which are directed towards the middle and at their outside edge verge into a cylindrical middle part (4b), which is adjoined by a raceway-shaped edge region (4c), which rests against the surface of the bearing ball (3c).

2. Ball joint according to claim 1, characterized in that formed in the edge region (5c) of the cover (5) is an annular indentation (5b), which extends towards the spring element (4) and the neutral axis (5d) of which lies below the annular line of contact (5f) of the bottom cover edge with the cylindrical inner surface of the joint housing (1).

3. Ball joint according to claim 1 or 2, characterized in that the edge (1d) of the joint housing (1) is rolled-in so as to form a positive stop.

4. Ball joint according to at least one of claims 1 to 3, characterized in that the raceway-shaped edge region (4c) adjoining the cylindrical middle part (4b) of the spring element (4) terminates in an outward projecting annular collar (4d).

5. Ball joint according to at least one of claims 1 to 4, characterized in that the spring tongues (4a) verge continuously into the cylindrical middle part (4b) of the spring element (4) with simultaneous formation of a rolling radius.

## Revendications

1. Articulation à rotule, notamment pour les barres d'accouplement et de direction de véhicules automobiles utilitaires, comportant un support d'articulation dans lequel la sphère de support d'un pivot sphérique peut être logée de façon à pouvoir tourner et basculer au moyen d'une coquille de support qui est placée par concordance de formes dans la partie inférieure du support d'articulation et qui appuie la sphère de support en dessous de son plus grand diamètre sur une surface de support en forme d'anneau de sphère avec une charge due à une force élastique qui est produite par un élément ressort formant en même temps une coquille de support supérieure et qui s'appuie sur le côté inférieur d'un couvercle fermant le support d'articulation,
caractérisée en ce que le couvercle (5), conçu avec un diamètre extérieur dépassant le diamètre intérieur du support d'articulation (1), s'appuie par force avec son bord (5c) dans le support d'articulation (1) et en ce que l'élément ressort (4) s'appuie exclusivement au centre du chapeau (5) au moyen de lames de ressort (4a) dirigées vers le centre qui se transforment à leur bord extérieur en une pièce centrale cylindrique (4b) à laquelle se raccorde une zone de bord (4c) en forme d'anneau de sphère et adjacente à la surface de la sphère de support (3c).

2. Articulation à rotule selon la revendication 1, caractérisée en ce que, dans la zone de bord (5c) du couvercle (5), est formé un creux annulaire (5b) qui s'étend vers l'élément ressort (4) et dont la fibre neutre (5d) se trouve en dessous de la ligne de contact annulaire (5f) du bord inférieur du couvercle contre la surface intérieure cylindrique du support d'articulation (1).

3. Articulation à rotule selon la revendication 1 ou 2, caractérisée en ce que le bord (1d) du support d'articulation (1) est configuré par laminage pour constituer une butée de par sa forme.

4. Articulation à rotule selon au moins l'une des revendications 1 à 3, caractérisée en ce que la zone de bord (4c), en forme d'anneau de sphère et se raccordant à la partie centrale cylindrique (4b), de l'élément ressort (4) se termine en un collet annulaire (4d) dépassant vers l'extérieur.

5. Articulation à rotule selon au moins l'une des revendications 1 à 4, caractérisée en ce que les lames de ressort (4a) présentent une transition de façon continue à la partie centrale cylindrique (4b) de l'élément ressort (4) en formant un rayon de roulement.
